# EUROPÄISCHE PATENTANMELDUNG

(11) **EP 0 847 797 A1**
(43) Veröffentlichungstag der Anmeldung: **17.06.1998**
(21) Anmeldenummer: 96119838.9
(22) Anmeldetag: 11.12.1996
(51) Int. Cl.: B01F 3/04

(54) **Verfahren und Vorrichtung zum Einleiten eines Gases in ein Gewässer**

(71) Anmelder: Esser, Paul, 53489 Sinzig-Westum (DE)
(72) Erfinder: Esser, Paul, 53489 Sinzig-Westum (DE)
(74) Vertreter: KEIL & SCHAAFHAUSEN Patentanwälte

(57) **Zusammenfassung**

Verfahren und Vorrichtung zum Einleiten eines Gases in ein Gewässer, bei dem ein unter Atmosphärendruck stehendes Gas durch ein über die Flüssigkeitsoberfläche hinausragendes Saugrohr entweder durch die Drehbewegung eines mit Flügeln versehenen Rotors in eine unter der Flüssigkeitsoberfläche angebrachte, oben und unten geschlossene Lochtrommel, oder durch die Drehbewegung der Lochtrommel selbst eingesaugt und durch die Löcher der Lochtrommel in Bläschenform an die Flüssigkeit abgegeben wird.

## Beschreibung

Gegenstand der Erfindung ist ein Verfahren und eine Vorrichtung zum Einleiten eines Gases in ein Gewässer, bei dem unter Atmosphärendruck stehendes Gas durch einen unter der Wasseroberfläche in einer Lochtrommel sich bewegenden Rotor angesaugt und durch die Öffnungen der Lochtrommel an die Flüssigkeit abgegeben wird.

Verfahren zum Einbringen von Gasen in Flüssigkeiten haben auf vielen Gebieten der Technik große Bedeutung erlangt. Zahlreiche Verfahren sind beispielsweise zur Belüftung oder Sauerstoffanreicherung von Abwässern in den letzten Jahren vorgeschlagen worden, um dadurch die Voraussetzungen für einen biologischen Abbau von Verunreinigungen zu schaffen. So ist aus der DE-OS 43 30 207 ein Verfahren und eine Vorrichtung zum Belüften und Durchmischen von Flüssigkeiten in einem Becken bekannt, bei dem die Flüssigkeit von oben in einen Stator einfließt, dort durch den Rotor nach unten gesaugt und die durch einen ringförmigen Spalt eintretende Luft in Bläschenform in die Flüssigkeit eingebracht wird, die dann zusammen mit der Flüssigkeit in das Becken zurückströmt.

Aber auch das Einleiten von Heißluft zum Zwecke der Erwärmung oder das Einleiten von Kaltluft zum Zwecke der Abkühlung von Flüssigkeiten, insbesondere von Wasser, erfordern spezielle Technologien, wenn ein hoher Wirkungsgrad und gleichzeitig ein möglichst geringer Energie- und Kostenaufwand als Bedingungen vorgegeben sind. Schließlich ist auch die Befreiung der Luft und anderer Gase von Schwebstoffen, Geruchsanteilen und anderen Verunreinigungen durch Einleiten in Flüssigkeiten möglich, sofern hierfür eine effektive Technologie zur Verfügung steht.

Die besonders auf dem Gebiet der Abwasseraufbereitung bereits entwickelten Verfahren mit den dazugehörigen Belüftungsvorrichtungen sind jedoch nur dann brauchbar, wenn sie zwei Grundvoraussetzungen erfüllen:
- Sie müssen gewährleisten, daß eine für die biologische Aktivität optimale Sauerstoff-Konzentration erreicht wird;
- Sie müssen sicherstellen, daß die flüssige Phase gleichmäßig durchmischt wird, um eine möglichst vollständige Sauerstoffaufnahme aus dem eingeleiteten Gas zu erreichen.

Außerdem sollen die Investitions-, die Betriebs- und die Wartungskosten von Belüftersystemen so gering wie möglich sein, um die Industrie, aber auch Städte und Gemeinden in den Stand zu setzen, die Anforderungen des Umweltschutzes wirtschaftlich erfüllen zu können.

Die bisher angewandten Belüftungsverfahren und die dafür bestimmten Vorrichtungen können diese Bedingungen häufig nur teilweise oder unzureichend erfüllen, weil die physikalischhydrostatischen Voraussetzungen für eine wirkungsvolle Aufnahme eines Gases wie Sauerstoff in einer Flüssigkeit wie Wasser nicht berücksichtigt werden.

Ein entscheidender Mangel der bisherigen Belüftungsverfahren ist darin zu sehen, daß man zur Erreichung einer schnellen und hohen Gassättigung möglichst große Mengen stark komprimierten Gases in die Flüssigkeit einleitet. Obwohl schon vielfältige Maßnahmen vorgeschlagen wurden, um aus dem komprimierten Gas möglichst feine Bläschen zu bilden, die durch ihre große Oberfläche die Absorption des Gases in der Flüssigkeit erhöhen sollen, kann die geringe Wirksamkeit dieser Maßnahmen sofort daran erkannt werden, daß ein Großteil des eingeleiteten Gases in Form von Luftblasen schnell wieder an die Oberfläche der Flüssigkeit steigt. Die weitaus überwiegende Menge des mit erheblichem Energieaufwand in die Flüssigkeit hineingedrückten Gases kommt also überhaupt nicht zur Wirkung, sondern verläßt die Flüssigkeit wieder, ohne absorbiert worden zu sein.

Die wichtigste Voraussetzung für eine weitgehende Absorption eines Gases in einer Flüssigkeit besteht darin, dem Gasbläschen ausreichend Zeit für einen innigen Kontakt mit der Flüssigkeit zu geben. Es muß dafür Sorge getragen werden, daß das Gasbläschen nicht etwa explosionsartig an die Flüssigkeitsoberfläche steigt, sondern möglichst lange in der Flüssigkeit schwebt, damit genügend Gelegenheit für einen Stoffaustausch zwischen Gas- und Flüssigkeitsphase besteht.

Diese Bedingung ist beim Einleiten eines unter hohem Druck stehenden, komprimierten Gases niemals gegeben. Denn das aus einem komprimierten Gas gebildete Gasbläschen hat in der Flüssigkeit zunächst einmal einen Innendruck, der dem Druck des eingeleiteten Gases entspricht. Auf der Außenwand dieses Gasbläschens lastet dabei der von der Eintauchtiefe abhängige hydrostatische Flüssigkeitsdruck, der natürlich erheblich geringer ist als der Innendruck des Gasbläschens. Folglich dehnt sich dieses wie ein Luftballon aus - und zwar so lange, bis der Innendruck des Gasbläschens gleich dem hydrostatischen Außendruck ist, den die Flüssigkeit auf die Bläschenwand ausübt. Bei diesem Vorgang vergrößert sich das Volumen des Gasbläschens um ein Vielfaches, wobei gleichzeitig sein Auftrieb entsprechend dem Gewicht des verdrängten Flüssigkeitsvolumens ständig ansteigt. Hieraus folgt, daß je stärker komprimiert das eingeleitete Gas ist, desto größere Bläschen mit umso stärkerem Auftrieb gebildet werden, die die Flüssigkeit so schnell wieder verlassen, daß es zu einem wirksamen Stoffaustausch zwischen Gas- und Flüssigkeitsphase garnicht kommen kann. Dazu ist die Verweilzeit des Gasbläschens in der Flüssigkeit viel zu kurz. An diesem grundsätzlichen Mangel leiden alle konventionellen Verfahren, die durch die Anwendung von komprimierten, unter Druck stehenden Gasen eine rasche Sättigung der Flüssigkeit mit einem Gas anstreben.

Der vorliegenden Erfindung liegt nun die Erkenntnis zugrunde, daß sich eine für die Absorption des Gases in der Flüssigkeit ausreichende Verweilzeit nur erreichen läßt, wenn das frisch gebildete Gasbläschen etwa den gleichen Innendruck hat wie der von außen auf dem Bläschen lastende hydrostatische Druck. Dann schwebt das Gasbläschen ohne Volumenvergrößerung und ohne Erhöhung seines Auftriebs so lange in der Flüssigkeit, bis die von der jeweiligen Temperatur und der Natur der Flüssigkeit abhängige Sättigungskonzentration für das eingeleitete Gas erreicht ist.

Gleichzeitig mit der Einleitung des Gases muß jedoch auch für eine gute Durchmischung der Flüssigkeit mit den Gasbläschen gesorgt werden. Das läßt sich zweckmäßig dadurch erreichen, daß die Gasbläschen mittels eines Rotors in der Flüssigkeit verteilt werden. Derartige Rotoren sind jedoch insbesondere beim Betrieb in Abwässern mit einem hohen Anteil an Pflanzenresten sehr störanfällig, weil fadenartige oder langstielige Pflanzenreste den Rotor umschlingen und ihn dann blockieren können.

Es stellte sich deshalb die Aufgabe, ein Verfahren und eine Vorrichtung zu entwickeln, mit denen gleichzeitig sowohl eine gute Durchmischung eines Abwassers durch einen vor Umschlingungen geschützten Rotor als auch die Einleitung eines Gases wie Luft oder Sauerstoff unter Anwendung eines möglichst geringen Druckes in Form von Gasbläschen möglich ist, so daß diese ohne oder mit nur geringem Auftrieb genügend lange in der Flüssigkeit schweben, um die Sättigungskonzentration der Flüssigkeit für das Gas zu erreichen.

Gelöst wird diese Aufgabe durch ein Verfahren zum Einleiten eines Gases in ein Gewässer, bei dem ein unter Atmosphärendruck stehendes Gas durch ein über die Flüssigkeitsoberfläche hinausragendes Saugrohr entweder durch die Drehbewegung eines mit Flügeln versehenen Rotors in eine unter der Flüssigkeitsoberfläche angebrachte, oben und unten geschlossene Lochtrommel oder durch die Drehbewegung der Lochtrommel selbst angesaugt und durch die Löcher der Lochtrommel in Bläschenform an die Flüssigkeit abgegeben wird. Dabei ist die Umdrehungsgeschwindigkeit des Rotors und/oder der Lochtrommel so einzustellen, daß innerhalb der Lochtrommel ein Gasdruck erzeugt wird, der gleich oder nur geringfügig größer als der von außen auf der Lochtrommel lastende hydrostatische Druck ist, und damit ein Eindringen der Flüssigkeit in die Lochtrommel verhindert wird. Die von der Lochtrommel an die Flüssigkeit abgegebenen Gasbläschen haben dabei von Anfang an einen Innendruck, der gleich dem hydrostatischen Außendruck der sie umgebenden Flüssigkeit ist. Sie schweben deshalb in der Flüssigkeit oder steigen allenfalls ganz langsam an die Flüssigkeitsoberfläche, wodurch genügend Zeit für eine Absorption des eingeleiteten Gases bis zur Sättigungskonzentration in der Flüssigkeit besteht.

Bei diesem Verfahren können reiner Sauerstoff, Luft, aber auch beliebige andere Gase und sogar Abgase eingesetzt werden, bei denen der intensive Kontakt mit der Flüssigkeit die Reinigung von Schwebstoffen, Geruchsstoffen und anderen Verunreinigungen ermöglicht. So kann nach diesem Verfahren z.B. auch Rauchgas gereinigt werden, indem es in eine Flüssigkeit eingeleitet wird, die das Gas absorbiert und die im Gas enthaltenen Rauchpartikel benetzt, löst oder sedimentiert. Falls in dem Gas wertvolle Stäube enthalten sind, können sie so gesammelt und wiedergewonnen werden.

Hauptanwendungsgebiet des erfindungsgemäßen Verfahrens ist aber die Einleitung und Absorption von Luftsauerstoff in Abwässern, um deren biologische Regeneration zu ermöglichen. Durch die Saugwirkung der Flügel des Rotors und/oder der Lochtrommel kann das Gas oder der Luftsauerstoff durch ein Saugrohr bis in große Gewässertiefen geleitet werden. Durch die Rotation der Flügel wird das Gas unter dem geringst möglichen Druck- und Energieaufwand in Form feiner Bläschen an die Flüssigkeit abgegeben, deren Innendruck gleich dem hydrostatischen Außendruck der Flüssigkeit ist.

Bei konventionellen Belüftungsverfahren von Flüssigkeiten hängt die erreichte Übertragungsleistung des eingeleiteten Gases auf die Flüssigkeit in hohem Maße von der Becken- oder Gewässertiefe ab. Je tiefer unter der Wasseroberfläche die Bildung der Gasbläschen erfolgt, desto länger ist die Wegstrecke, die das aufsteigende Gasbläschen bis zur Wasseroberfläche zurückzulegen hat und desto bessere Aussichten bestehen, möglichst große Mengen des eingeleiteten Gases in der Flüssigkeit zu absorbieren. Diese Überlegungen treffen zwar auch für das erfindungsgemäße Belüftungsverfahren zu, jedoch ist hier die Einleitungstiefe des Gases für die erreichte Sättigungskonzentration der Flüssigkeit mit dem Gas bei weitem nicht von so großer Bedeutung, weil auch bei geringerer Wassertiefe das gebildete Gasbläschen wegen seiner geringen Auftauchgeschwindigkeit genügend lange in der flüssigen Phase verbleibt, um die Absorption des Gases in der Flüssigkeit bis zur Sättigungskonzentration zu erreichen.

Zur Durchführung des erfindungsgemäßen Verfahrens wurde nun eine Vorrichtung zur Belüftung von Gewässern entwickelt, bei dem ein oder mehrere über die Flüssigkeitsoberfläche hinausragende Saugrohre 1 mit einer oben und unten geschlossenen, unter der Flüssigkeitsoberfläche aufgestellten Lochtrommel 2 verbunden sind, in der sich ein mit Flügeln 5 versehener Rotor 4 befindet, und durch einen Motor 3 entweder der Rotor oder die Lochtrommel oder beide gleichzeitig angetrieben werden können. Zweckmäßigerweise ist dabei eine Schaltung vorzusehen, die es erlaubt, jederzeit vom Antrieb des Rotors auf den Antrieb der Lochtrommel und auf den gemeinsamen Antrieb von Lochtrommel und Rotor überzuwechseln. Bewährt hat sich auch eine Vorrichtung, die eine Möglichkeit vorsieht, die Flügel des Rotors mit der Lochtrommel fest zu verbinden, so daß beide die Drehbewegung aneinander gekoppelt durchführen.

Soll jedoch ein stark verunreinigtes Abwasser wie Gülle belüftet werden, dann wird nur der Rotor 4 angetrieben, während die Lochtrommel 2 sich selbst nicht dreht, um deren Umschließung und Blockierung durch langstielige Schwebstoffe zu vermeiden. Beim Güllebetrieb sollte zweckmäßigerweise nur eine einfache Lochtrommel eingesetzt werden.

Die Lochtrommel 2, deren Löcher in die Wand vorzugsweise in einem flachen Winkel eingelassen sind, kann aus Metall, vorzugsweise jedoch aus einem thermoplastischen Kunststoff bestehen.

Die an dem Rotor angebrachten Flügel können aus Kunststoff, zweckmäßigerweise jedoch aus einem elastischen, weichen Material wie Gummi bestehen, die eng an der Innenwand der Lochtrommel anliegen und bei der Bewegung des Rotors oder der Lochtrommel an dieser entlanggleiten. Das Saugrohr wird zweckmäßigerweise aus Glas, einem starren thermoplastischen Kunststoff oder aus einem flexiblen Schlauchmaterial her gestellt.
- Fig. 1: zeigt die erfindungsgemäße Vorrichtung mit einfacher Lochtrommel.
- Fig. 2: zeigt die erfindungsgemäße Vorrichtung mit Doppellochtrommel.
- Fig. 3: zeigt die einfache Lochtrommel mit dem Rotor von oben betrachtet.

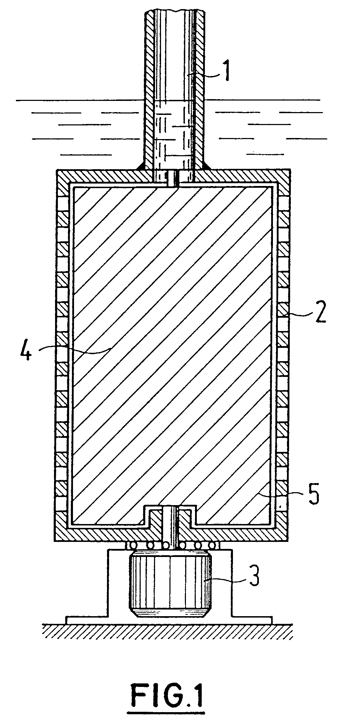

Fig. 1 zeigt die erfindungsgemäße Vorrichtung mit dem Saugrohr 1, das in die oben und unten geschlossene Lochtrommel hineinführt. Durch den Motor 3 werden die Lochtrommel 2 und/oder der Rotor 4 angetrieben, der mehrere Flügel 5 trägt. Die Vorrichtung wird durch ein Gestell getragen, das für einen festen Stand auf dem Gewässerboden sorgt. Die durch das Saugrohr 1 in die Lochtrommel 2 eintretende Luft wird mittels der Flügel des Rotors oder durch die Rotation der Lochtrommel 2 bei stillstehenden oder mit ihr fest verbundenen Flügeln 5 durch die Löcher der Lochtrommel in die Flüssigkeit gefördert und tritt dort in Form von feinen Gasbläschen in die flüssige Phase über.

Wird ein derartiger erfindungsgemäßer Belüfter nun in ein Wasserbecken eingesetzt, dann ragt nur das Saugrohr 1 über die Wasseroberfläche hinaus. Allerdings braucht der Belüfter nicht unbedingt mit einem Unterwassermotor zu arbeiten. Der Rotor kann auch über eine Kardanwelle durch einen über der Wasseroberfläche angebrachten Motor angetrieben werden. Das kann von Vorteil sein, wenn an dem Motor häufig Wartungsarbeiten durchgeführt werden müssen, die bei einem über der Wasseroberfläche angebrachten und damit leichter zugänglichen Motor einfacher angegangen werden können. Zu Beginn der Belüftung ist das Saugrohr 1 bis zur Wasseroberfläche mit Wasser gefüllt. Falls nun der Rotor in Drehbewegung versetzt wird, transportiert er zunächst das im Saugrohr und in der Lochtrommel befindliche Wasser in die umgebende Flüssigkeit. In das jetzt entleerte Saugrohr 1 strömt von oben Luft nach, die von den Flügeln des Rotors über die Löcher der Lochtrommel an die Grenzfläche Gas/Flüssigkeit gefördert wird. Die Umdrehungsgeschwindigkeit des Rotors wird dabei so eingestellt, daß ein Rückfluß von Wasser in die entleerte Lochtrommel 2 und das Saugrohr 1 verhindert wird und ein zum Übertritt der Luftbläschen in die umgebende Flüssigkeitsphase erforderlicher minimaler Überdruck entsteht. So läßt sich eine Umdrehungsgeschwindigkeit einstellen, bei der bei Einleitung von Sauerstoff in ein sauerstoffarmes Abwasser ein Aufsteigen von Gasbläschen bis an die Wasseroberfläche nicht mehr beobachtet werden kann. Höhere Umdrehungsgeschwindigkeiten, mit denen das Gas oder die Luft nach Art eines Ventilators in die Flüssigkeit hineingewirbelt wird, müssen vermieden werden, weil dadurch das Gas unter Druck in die Flüssigkeit hineingepreßt würde, mit der Folge, daß sich rasch große Gasblasen mit starkem Auftrieb bilden und das Gas dann die Flüssigkeit sehr schnell wieder verlassen würde.

In das Saugrohr 1 kann anstelle von Luft auch heißes Gas oder gekühltes Gas eingeleitet werden, um damit die Temperatur der Flüssigkeit zu erhöhen oder abzusenken.

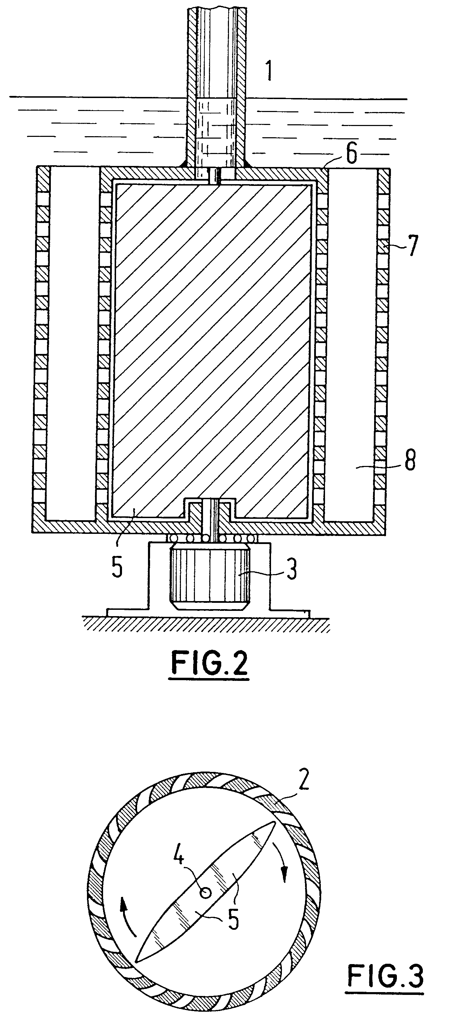

Fig. 2 zeigt eine vorteilhafte Weiterentwicklung der Lochtrommel 2 bestehend aus einer inneren Lochtrommel 6 und einer äußeren Lochtrommel 7, zwischen denen ein mit Flüsigkeit gefüllter, nach oben offener, wenige Zentimeter breiter, Zwischenraum 8 liegt. Innere und äußere Lochtrommeln sind lösbar miteinander verbunden, können also entweder mit gleicher Geschwindigkeit laufen, können aber auch voneinander getrennt sein und dann mit unterschiedlichen Umlaufgeschwin digkeiten arbeiten.

Der besondere Vorteil einer derartigen Doppellochtrommel besteht darin, daß die aus der inneren Lochtrommel 6 austretenden Gasbläschen zusammen mit von oben einströmender Flüssigkeit sofort von der äußeren Lochtrommel 7 aus dem Zwischenraum 8 abgesaugt und ohne Druckanwendung in einem weiten Bereich in der umgebenden Flüssigkeit verteilt werden. Durch die Drehbewegung der äußeren Lochtrommel 7 entsteht in den Löchern der inneren Lochtrommel 6 an der Grenzfläche Gas/Flüssigkeit ein Sog, der den Übertritt der Gasbläschen in die flüssige Phase erheblich erleichtert.

Eine besondere Variante des erfindungsgemäßen Belüfters besteht darin, daß auf das Saugrohr 1 ein in die Flüssigkeit wieder eintauchender Rohrkrümmer aufgesetzt wird, durch den die Flüssigkeit über das Saugrohr 1 in die Lochtrommel 2 geleitet und somit eine rasche Umwälzung des Wassers in dem Gewässer erreicht werden kann. Der Rohrkrümmer kann auf dem Saugrohr 1 drehbar gelagert sein und entweder motorisch oder per Hand angetrieben werden. Er beschreibt dann einen großen Kreisbogen, mit dem der Aktionsradius in der zu mischenden Flüssigkeit erheblich verbessert wird.

Der erfindungsgemäße Belüfter arbeitet äußerst energiesparend. Abgesehen von der anfänglichen Entleerung des wassergefüllten Saugrohres und abgesehen auch von dem Sonderfall, bei dem der Belüfter durch einen auf das Saugrohr 1 aufgesetzten Rohrkrümmer als Flüssigkeitsumwälzanlage gebraucht wird, wird durch den Rotor 4 mit seinen Flügeln 5 im wesentlichen nur Gas gefördert und dabei nur eine äußerst geringe Pumpleistung vollbracht. Hinzu kommt, daß die Turbine nur mit einer geringen Geschwindigkeit arbeitet, die nur gerade so groß ist, daß ein ausreichender Gegendruck erzeugt wird, um ein Eindringen der Flüssigkeit von außen in die Lochtrommel zu verhindern.

Die in der erfindungsgemäßen Vorrichtung verwendete Lochtrommel oder Doppellochtrommel kann ohne weiteres eine Höhe von ein oder zwei Metern haben. Durch die unzähligen, in die Trommelwand eingelassenen Bohrungen, die, wie Fig. 3 zeigt, vorzugsweise flachwinklig angeordnet sind, ist die Grenzfläche Gas/Flüssigkeit so enorm vergrößert, daß große Mengen Luft oder Sauerstoff in kurzer Zeit von der Flüssigkeit absorbiert werden können. Die Belüftungszeit wird dadurch erheblich kürzer als bei anderen Belüftungssystemen und der Energieverbrauch der rotierenden Lochtrommel entsprechend gesenkt.

### Bezugszeichenliste

- 1: Saugrohr
- 2: Lochtrommel
- 3: Motor
- 4: Rotor
- 5: Flügel des Rotors
- 6: innere Lochtrommel
- 7: äußere Lochtrommel
- 8: Zwischenraum

## Patentansprüche

1. Verfahren zum Einleiten eines Gases in ein Gewässer, **dadurch gekennzeichnet**, daß ein unter Atmosphärendruck stehendes Gas durch ein über die Flüssigkeitsoberfläche hinausragendes Saugrohr (1) entweder durch die Drehbewegung eines mit Flügeln (5) versehenen Rotors (4) in eine unter der Flüssigkeitsoberfläche angebrachte, oben und unten geschlossene Lochtrommel (2) oder durch die Drehbewegung der Lochtrommel selbst eingesaugt und durch die Löcher der Lochtrommel in Bläschenform an die Flüssigkeit abgegeben wird.

2. Verfahren nach Anspruch 1, **dadurch gekennzeichnet**, daß die Umdrehungsgeschwindigkeit des Rotors oder der Lochtrommel so eingestellt wird, daß innerhalb der Lochtrommel (2) ein Gasdruck erzeugt wird, der gleich oder nur geringfügig größer als der von außen auf der Lochtrommel (2) lastende hydrostatische Druck ist und damit ein Eindringen der Flüssigkeit in die Lochtrommel (2) verhindert wird.

3. Verfahren nach Anspruch 1 oder 2, **dadurch gekennzeichnet**, daß die aus der Lochtrommel (2) an die Flüssigkeit abgegebenen Gasbläschen einen so geringen Auftrieb haben, daß das Gas von der Flüssigkeit bis an die Sättigungskonzentration heran absorbiert wird.

4. Vorrichtung zur Belüftung von Gewässern, **dadurch gekennzeichnet**, daß ein oder mehrere über die Flüssigkeitsoberfläche hinausragende Saugrohre (1) mit einer oben und unten geschlossenen, unter der Flüsigkeitsoberfläche aufgestellten Lochtrommel (2) verbunden sind, in der sich ein mit Flügeln (5) versehener Rotor (4) befindet, und durch einen Motor (3) entweder der Rotor oder die Lochtrommel oder beide gleichzeitig angetrieben werden können.

5. Vorrichtung nach Anspruch 4, **dadurch gekennzeichnet**, daß vom Antrieb des Rotors (4) auf den Antrieb der Lochtrommel (2) und auf den gleichzeitigen Antrieb von Rotor und Lochtrommel umgeschaltet werden kann.

6. Vorrichtung nach Anspruch 4, **dadurch gekennzeichnet**, daß die Flügel des Rotors fest mit der Lochtrommel verbunden sind.

7. Vorrichtung nach Anspruch 4, **dadurch gekennzeichnet**, daß als Lochtrommel (2) eine aus einer inneren (6) und einer äußeren Lochtrommel (7) bestehende Doppellochtrommel eingesetzt wird, zwischen denen ein nach oben offener Zwischenraum (8) liegt.

8. Vorrichtung nach Anspruch 7, **dadurch gekennzeichnet**, daß die innere (6) und äußere Lochtrommel (7) lösbar miteinander verbunden sind.

9. Vorrichtung nach Anspruch 4, **dadurch gekennzeichnet**, daß auf das Saugrohr (1) ein in die Flüssigkeit eintauchender Rohrkrümmer aufgesetzt ist, der drehbar gelagert sein kann.

10. Vorrichtung nach Anspruch 4, **dadurch gekennzeichnet**, daß das Saugrohr (1) aus Glas, einem starren thermoplastischen Kunststoff oder einem flexiblen Schlauchmaterial besteht.

11. Vorrichtung nach Anspruch 4, **dadurch gekennzeichnet**, daß die Lochtrommel (2) aus einem Metall oder einem thermoplastischen Kunststoff besteht.

12. Vorrichtung nach Anspruch 4, **dadurch gekennzeichnet**, daß die Löcher in die Wand der Lochtrommel (2) in einem flachen Winkel eingelassen sind.

13. Vorrichtung nach Anspruch 4, **dadurch gekennzeichnet**, daß der Rotor mit Flügeln versehen ist, die aus einem thermoplastischen Kunststoff oder einem elastischen Material bestehen, das sich eng an die Innenwand der Lochtrommel (2) anlegt.
